# NEUE EUROPÄISCHE PATENTSCHRIFT

(11) **EP 3 300 580 B2**
(45) Veröffentlichungstag und Bekanntmachung des Hinweises auf die Entscheidung über den Einspruch: **27.04.2022**
(45) Hinweis auf die Patenterteilung: 10.04.2019
(21) Anmeldenummer: 17185477.1
(22) Anmeldetag: 09.08.2017
(51) Int. Cl.: A01D 41/14, A01D 57/04

(54) **MÄHDRESCHER MIT EINEM SCHNEIDWERK UND STEUERUNG EINES SCHNEIDWERKS**
COMBINE HARVESTER WITH A CUTTING UNIT AND CONTROL OF THE CUTTING UNIT
MOISSONNEUSE-BATTEUSE POURVUE DE BARRE DE COUPE ET DISPOSITIF DE COMMANDE D'UNE BARRE DE COUPE

(30) Priorität: 30.09.2016 DE 102016118637
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Neu, Sebastian, 49196 Bad Laer (DE); Krause, Thilo, 39249 Glinde (DE); Middelberg, René, 49080 Osnabrück (DE); Baumgarten, Joachim, 48361 Beelen (DE); Wilken, Andreas, 49143 Bissendorf (DE); Jütte, Sebastian, 33129 Delbrück (DE); Beschorn, Udo, 33428 Harsewinkel (DE); Eidhoff, Lukas, 33378 Rheda-Wiedenbrück (DE)
(74) Vertreter: CLAAS Gruppe

(56) Entgegenhaltungen:
- EP-A1- 0 702 891
- EP-A1- 0 812 530
- EP-A1- 2 517 549
- EP-A1- 2 681 984
- EP-A1- 2 681 984
- WO-A1-2014/023632
- DE-A1- 2 411 153
- DE-A1- 2 900 841
- GB-A- 2 173 309
- GB-A- 2 173 309
- "New Holland CR9000", New Holland Brochure, August 2007 (2007-08), page 1,16,17,18,19,24, Hannover
- "Betriedsanleitung Claas CO 228, Druckvermerk D-06 95 - 50 - BEV", CEBIS, pages 1-68,

## Beschreibung

Die vorliegende Erfindung betrifft einen selbstfahrenden Mähdrescher
- mit einem Schneidwerk, das eine Haspel aufweist, die zum Neigen des Erntegutes in Richtung des Mähdreschers vorgesehen ist,
- eine Datenverarbeitungseinheit, die zur Erfassung und/oder Verarbeitung von Daten vorgesehen ist, und
- mit einer Steuerungs- und Regelungseinheit, die zum Steuern des Mähdreschers vorgesehen ist.

Die vorliegende Erfindung betrifft weiterhin ein Schneidwerk für einen solchen Mähdrescher, sowie ein Verfahren zum Steuern eines Schneidwerks, insbesondere eines solchen Mähdreschers.

Während einer Erntefahrt müssen selbstfahrende Erntemaschinen ständig an die Gegebenheiten und die Feldbeschaffenheit angepasst werden, um eine hohe Arbeitsleistung und Arbeitsqualität zu erzielen. Um die Leistung und den erzielten Ertrag zu maximieren, werden die Maschinen zudem möglichst an ihrer Leistungsgrenze gefahren. Aufgrund der Komplexität der Erntemaschinen und der Vielzahl der zu überwachenden Prozessparameter ist es einem Bediener jedoch nicht möglich, eine Erntefahrt über ihre gesamte Dauer manuell optimal zu steuern. Daher besteht die Tendenz, immer mehr Vorgänge in den Erntemaschinen zu automatisieren, so dass der Bediener während der Erntefahrt entlastet ist. Dadurch ist eine Leistungssteigerung des Erntevorgangs erzielbar.

Um möglichst frühzeitig auf die Gegebenheiten und die Feldbeschaffenheit reagieren zu können, ist es bekannt, das Vorfeld der Maschine mittels Sensoren zu erfassen, und die Erntemaschine in Abhängigkeit von den erfassten Daten zu steuern. Die Druckschrift WO 2014/093814 A1 offenbart beispielsweise eine Vorfelderkennung zur Erfassung der Bestandshöhe, Bestandsdichte oder Bestandsfeuchte des Erntegutes, bei der ein Laserscanner oder Kameras für die Erfassung des Vorfeldes genutzt werden. In Abhängigkeit von den erfassten Daten werden Maschinenparameter wie beispielsweise die Fahrtrichtung oder die Geschwindigkeit der Erntemaschine eingestellt.

Ein frühzeitiger Eingriff ist vor allem über eine Regelung des an der Erntemaschine angeordneten Vorsatzgerätes möglich. So ist beispielsweise beim Schneidwerk eines Mähdreschers eine auf das Erntegut und die Erntebedingungen gut eingestellte Haspel erforderlich, um Spritzkornverluste zu vermeiden, und einen gleichmäßigen Gutfluss zu gewährleisten. Die Haspel unterstützt das Schneiden der Halme, indem sie dafür vorgesehen ist, das Erntegut zu neigen, so dass die Halme leicht geschnitten werden können und die abgeschnittene Pflanze zuerst mit den Ähren zur Querförderschnecke gelangen. Dafür sind an der Haspel Zinken vorgesehen, die den Erntegutbestand durchkämmen. Die Haspel wird dafür bei stehendem Erntegut etwa auf Höhe des Erntegutbestandes, und bei liegendem Erntegut bodennah geführt.

Da die Ernteguthöhe und seine Bestandsdichte kontinuierlich variieren, muss die Höhe der Haspel ständig angepasst werden. Aus der Druckschrift DE 103 39 551 A1 sind eine Vorrichtung zur Steuerung eines Schneidwerks eines Mähdreschers sowie ein Verfahren zu seiner Steuerung bekannt, die eine automatische lastabhängige Einstellung der Haspelhöhe vorsehen. Dafür wird eine Haspelzugkraft mit einem Drucksensor erfasst, die einen Rückschluss auf die auf das Erntegut ausgeübte Kraft zulässt. Jedoch ist bei dieser Methode die Reaktionszeit bei Änderungen des Erntegutbestandes, insbesondere seiner Höhe oder Dichte, verhältnismäßig langsam, so dass es zu einer ungleichmäßigen Gutzufuhr kommen kann. Zudem ist liegendes Erntegut so schwer erkennbar.

Die Druckschrift EP 2 681 984 A1 offenbart einen Mähdrescher mit einem Schneidwerk, das eine Haspel aufweist, die höhenverstellbar ist, mit einem Sensor zur Ermittlung eines Istwertes der Höhenlage der Haspel, und mit einer Steuereinheit, die mit dem Sensor und zumindest einem Messwertaufnehmer zur Erfassung von Erntebedingungen des Mähdreschers und mit zur Höhenverstellung der Haspel dienenden Stellelementen verbunden ist, wobei der zumindest eine Messwertaufnehmer zur Erfassung von Schwankungen des Erntegutflusses in zumindest einem dem Schneidtisch nachgeordneten Förderorgan ausgebildet ist.

Aufgabe der vorliegenden Erfindung ist es, einen Mähdrescher mit einem Schneidwerk weiter zu verbessern, so dass zum einen die Einstellung des Schneidwerks, insbesondere der Haspel, weiter automatisiert ist, um den Bediener weiter zu entlasten, und zum anderen die Reaktionszeit bei Änderungen des Erntegutbestandes verkürzt ist, um eine gleichmäßigere Gutzufuhr zu gewährleisten.

Die Aufgabe wird gelöst mit einem selbstfahrenden Mähdrescher mit den Merkmalen des unabhängigen Patentanspruchs 1, sowie mit einem Verfahren zum Steuern einer Haspel eines Schneidwerks mit den Merkmalen des unabhängigen Patentanspruchs 11, Vorteilhafte Ausführungsformen sind den abhängigen Ansprüchen entnehmbar.

Die Aufgabe wird gelöst mit einem selbstfahrenden Mähdrescher, der ein Schneidwerk, das eine Haspel aufweist, die zum Neigen des Erntegutes in Richtung des Mähdreschers vorgesehen ist, umfasst. Der Mähdrescher umfasst weiterhin eine Datenverarbeitungseinheit, die zur Erfassung und/oder Verarbeitung von Daten vorgesehen ist, sowie eine Steuerungs- und Regelungseinheit, die zum Steuern des Mähdreschers vorgesehen ist. Die Daten sind bevorzugt Sensordaten, insbesondere einer Vorfelderkennung. Sie können unmittelbar während der Erntefahrt erfasst werden, oder bereits in einem Datenspeicher vorliegen. Sie umfassen zumindest Daten der Bestandshöhe. Zudem können sie Daten der Bestandsdichte und/oder des Erntegutes und/oder der Erntebedingungen umfassen.

Der Mähdrescher zeichnet sich dadurch aus, dass die Datenverarbeitungseinheit dazu ausgebildet ist, eine optimale Haspelhöhe der Haspel in Abhängigkeit von den erfassten Daten der Bestandshöhe zu ermitteln, und die Steuerungs- und Regelungseinheit dazu ausgebildet ist, eine tatsächliche Haspelhöhe der Haspel automatisch in Abhängigkeit von der optimalen Haspelhöhe einzustellen.

Durch die automatische Regelung der Haspelhöhe kann der Bediener während der Erntefahrt weiter von manuellen Einstellungen entlastet werden. Das Schneiden der Halme des Erntegutes kann so über die gesamte Dauer der Erntefahrt im Wesentlichen optimal erfolgen. Dadurch werden Erntegutverluste, insbesondere Spritzkörnerverluste vermieden.

Als Bestandshöhe wird im Folgenden die Höhe des Erntegutes gemessen vom Boden aus bezeichnet. Erfasst wird die Bestandshöhe bevorzugt zumindest über die Breite des Schneidwerks und in Fahrtrichtung vor dem Mähdrescher. Aufgrund der über die Schneidwerksbreite konstanten Höhe der Haspel wird bei einem über die Schneidwerksbreite ungleichmäßigen Verlauf der Bestandshöhe bevorzugt ein Mittelwert der Bestandshöhe des Erntegutes über die Schneidwerksbreite für die Berechnung der optimalen Haspelhöhe genutzt.

In einer ersten bevorzugten Ausführungsform ist die optimale Haspelhöhe die tatsächliche Haspelhöhe. Es ist aber weiterhin bevorzugt, dass dem Bediener eine Korrekturmöglichkeit für die Haspelhöhe eingeräumt wird, um diese an seine Vorstellungen besser anpassen zu können. Dafür ist es bevorzugt, dass die tatsächliche Haspelhöhe in Abhängigkeit von einem Sollwert eingestellt wird. Der Sollwert kann in einem Datenspeicher hinterlegt sein. Es ist aber besonders bevorzugt, dass er manuell eingebbar ist, insbesondere unmittelbar während der Erntefahrt. In einer besonders bevorzugten Ausführungsform wird eine Differenz zwischen dem vom Bediener eingegebenen Sollwert für die Haspelhöhe und der berechneten optimalen Haspelhöhe während der folgenden Erntefahrt als Offset für die Einstellung der tatsächlichen Haspelhöhe genutzt.

Dabei ist die Steuerungs- und Regelungseinheit erfindungsgemäß dazu ausgebildet, die tatsächliche Haspelhöhe erst zu verändern, wenn eine Änderung der Bestandshöhe einen ersten Schwellwert überschreitet. Ein solcher erster Schwellwert ist erntegutabhängig. Er kann beispielsweise für Weizen in einem Bereich von etwa 1 - 20 cm liegen. Für anderes Erntegut kann er auch erheblich darüber liegen, beispielsweise für Sonnenblumen. Vorzugsweise ist der erste Schwellwert durch den Bediener einstellbar. Das Verstellen erst beim Überschreiten des ersten Schwellwerts hat den Vorteil, dass die Haspelhöhe bei in Fahrtrichtung ungleichmäßiger Bestandshöhe nicht ständig nachgestellt wird.

Das Schneidwerk umfasst bevorzugt einen Schneidtisch, an dem ein Messerbalken zum Schneiden des Erntegutes angeordnet ist. Der Schneidtisch ist bevorzugt in und gegen eine Verstellrichtung verstellbar. Vorzugsweise ändert sich dadurch seine Schneidtischtiefe. Dafür kann der Schneidtisch verlängerbar oder ausziehbar ausgebildet sein. Es ist bevorzugt, dass die Steuerungs- und Regelungseinheit dazu ausgebildet ist, die Schneidtischtiefe in Abhängigkeit von der tatsächlichen Haspelhöhe oder der Bestandshöhe einzustellen. Die Schneidtischtiefe beeinflusst die Spritzkornverluste maßgeblich mit. Ist die Schneidtischtiefe zu lang im Verhältnis zur Länge des Erntegutes, dann reicht das geschnittene Erntegut nicht bis zur Querförderschnecke und wird nicht eingezogen. Es kann sich dann am Schneidtisch stauen. Ist der Schneidtisch zu kurz im Verhältnis zur Länge des Erntegutes, fällt das Erntegut mit den Ähren auf die Querförderschnecke und es kommt zu Spritzkornverlusten. Die automatische Einstellung der Schneidtischtiefe hat den Vorteil, dass einerseits ein Gutstau am Schneidtisch und andererseits Spritzkornverluste vermieden werden können. Zudem wird der Fahrer weiter entlastet, da er den Schneidtisch nicht manuell nachführen muss.

Auch in Bezug auf die Schneidtischtiefe ist es bevorzugt, dass die Steuerungs- und Regelungseinheit zudem dazu ausgebildet ist, die Schneidtischtiefe erst bei einer Änderung der tatsächlichen Haspelhöhe oder der Bestandshöhe zu ändern, wenn die Änderung der Bestandshöhe einen zweiten Schwellwert überschreitet. Dadurch wird auch in Bezug auf den Schneidtisch ein ständiges Verstellen, insbesondere um kleine Werte, vermieden.

Vorzugsweise ist dabei der zweite Schwellwert größer als der erste Schwellwert. Der Schneidtisch wird dadurch seltener als die Haspelhöhe verstellt. Auch der zweite Schwellwert ist bevorzugt durch den Bediener einstellbar.

Die Steuerungs- und Regelungseinheit kann zudem dazu ausgebildet sein, die Schneidtischtiefe in Abhängigkeit von einer Haspelhorizontalposition der Haspel einzustellen.

Weiterhin bevorzugt ist die Steuerungs- und Regelungseinheit dazu ausgebildet, die Schneidtischtiefe, die Haspelhöhe und/oder die Haspelhorizontalposition bei Änderung einer Schneidwerkshöhe des Schneidwerks einzustellen. Die Schneidwerkshöhe wird zumeist nur verstellt, wenn sie die Bestandshöhe von stehendem zu liegendem Erntegut oder umgekehrt ändert. Bei höher eingestelltem Schneidwerk ist die abzuschneidende Halmlänge kürzer als bei niedriger eingestelltem Schneidwerk. Um einerseits den Gutstau am Schneidtisch und andererseits die Spritzkornverluste zu vermeiden, wird der Schneidtisch bei Erhöhen des Schneidwerks daher verkürzt, und bei Absenken des Schneidwerks verlängert.

Bei einer insbesondere abrupten Verstellung der Haspelhöhe über einen großen Verstellweg kann es zu Nickbewegungen des Mähdreschers kommen. Daher ist es bevorzugt, dass die tatsächliche Haspelhöhe verlangsamt eingestellt wird, wenn eine Änderung der Bestandshöhe einen dritten Schwellwert, der größer als der erste Schwellwert, vorzugsweise zudem größer als der zweite Schwellwert ist, überschreitet. Dafür wird beispielsweise ein PT1- Filter oder ein Rate- Limiter genutzt. Eine Zeitkonstante, die die Dämpfung der Verstellung bestimmt, ist vorzugsweise einstellbar.

Weiterhin ist es bevorzugt, die tatsächliche Bestandhöhe zudem in Abhängigkeit vom Gutfluss zu berechnen, um diesen zu optimieren. Vorzugsweise weist der Mähdrescher dafür einen Durchlasssensor oder einen Schichtdickensensor, insbesondere in einem Schrägförderer für das Erntegut, auf. Die Steuerungs- und Regelungseinheit ist dann dazu ausgebildet, die optimale Bestandshöhe in Abhängigkeit von den erfassten Daten des Durchlasssensors oder des Schichtdickensensors zu korrigieren.

In einer bevorzugten Ausführungsform ist die Steuerungs- und Regelungseinheit ein Bestandteil eines Schneidwerksautomaten, wobei das Einstellen der tatsächlichen Bestandshöhe gemäß Prozessstrategien des Schneidwerksautomaten erfolgt. Vorzugsweise umfassen die Prozessstrategien dabei zumindest eine Prozessstrategie für stehenden Bestand, zumindest eine Prozessstrategie für liegenden Bestand, sowie zumindest eine Prozessstrategie für Wendemanöver. Ein solcher Schneidwerksautomat ist in der deutschen Patentanmeldung mit der Anmeldenummer 10 2015 113 527.2 offenbart.

Um die Daten der Bestandshöhe zu erfassen, sind verschiedene Vorgehensweisen denkbar. In einer bevorzugten Ausführungsform weist der Mähdrescher dafür einen Vorfeldsensor auf, wobei die Datenverarbeitungseinheit dazu ausgebildet ist, die Bestandshöhe anhand der vom Vorfeldsensor erfassten Daten zu ermitteln. Bei dieser Vorgehensweise werden die Daten während der Erntefahrt erfasst. Ein solcher Vorfeldsensor ist bevorzugt ein Lasersensor oder eine Kamera, insbesondere eine Stereokamera. Bevorzugt sind ebenfalls die Verwendung von Radarsensoren, Ultraschallsensoren oder weitere Sensoren anderer Ausführungsform.

Bei einer weiteren Vorgehensweise umfasst die Datenverarbeitungseinheit einen Datenspeicher, in dem die erfassten Daten der Bestandshöhe hinterlegt sind. Bei dieser Ausführungsform werden die Daten der Bestandshöhe vor der Erntefahrt, beispielsweise mit Hilfe einer Drohne, erfasst. Es ist auch bevorzugt, eine Datenerfassung mittels eines GPS (global positioning system) zu nutzen.

Die Bedienerschnittstelle weist bevorzugt Ausgabemittel zum Anzeigen der Position der Haspel, insbesondere der Haspelhöhe und/oder der Haspelhorizontale, auf. Um die Einstellung der Haspel für den Bediener so weit wie möglich zu vereinfachen, ist es weiterhin bevorzugt, dass die Eingabe und/oder Anzeige der Position der Haspel, und/oder eine Änderung der Position der Haspel, in geradlinigen Koordinaten erfolgt.

Die automatische Regelung der tatsächlichen Haspelhöhe ist in einer bevorzugten Ausführungsform des Mähdreschers ausschaltbar. Die Steuerungs- und Regelungseinheit ist dann dazu ausgebildet, die tatsächliche Haspelhöhe anhand von manuellen Eingaben des Bedieners zu steuern. Der Bediener kann daher jederzeit ins Geschehen eingreifen und die Führung der Erntefahrt, insbesondere die Einstellung der Haspelhöhe, manuell übernehmen

Die Aufgabe wird weiterhin gelöst mit einem Schneidwerk für einen solchen Mähdrescher. Das Schneidwerk weist die Haspel sowie den Schneidtisch auf. Zudem weist es bevorzugt die Querförderschnecke auf. Zum Einstellen des Schneidwerks werden bevorzugt herkömmliche Aktoren, insbesondere hydraulische oder elektromotorische Aktoren, verwendet. Dafür ist es in einer weiteren Ausführungsform bevorzugt, dass das Schneidwerk eine Steuerungs- und Regelungseinrichtung aufweist, die dazu eingerichtet ist, die Aktoren in Abhängigkeit von der erfassten Bestandshöhe zu steuern oder zu regeln. Für die Steuerung oder Regelung der Aktoren ist es aber besonders bevorzugt, eine zentrale Steuerungs- und Regelungseinheit des Mähdreschers zu nutzen.

Die Aufgabe wird weiterhin gelöst mit einem Verfahren zum Steuern einer Haspel eines Mähdreschers, bei dem
- Eine optimale Haspelhöhe in Abhängigkeit von erfassten Daten der Bestandshöhe ermittelt wird, und
- Eine tatsächliche Haspelhöhe der Haspel automatisch anhand der optimalen Haspelhöhe eingestellt wird.
Das Verfahren wird zyklisch wiederholt. Dabei werden jeweils die erfassten Daten der Bestandshöhe des aktuell vor dem Schneidwerk angeordneten Ernteguts für die Berechnung der optimalen Haspelhöhe verwendet. Die Einstellung erfolgt dann, wenn eine Änderung der Bestandshöhe einen ersten Schwellwert überschreitet. Dabei wird die Häufigkeit der Haspelhöhenverstellung mittels des ersten Schwellwertes gering gehalten, so dass nicht jede kleinste Schwankung der Bestandshöhe zu einer Verstellung der Haspel führt.

Das Verfahren ermöglicht eine automatische Regelung der tatsächlichen Haspelhöhe, in die der Bediener nicht oder seinen Wünschen gemäß eingreifen kann. Sofern der Bediener eingreifen möchte, erfolgt die Einstellung der tatsächlichen Haspelhöhe in Abhängigkeit von einem Sollwert. Der Bediener g dann reift in die Regelung ein, indem er den Sollwert an der Bedienerschnittstelle einstellt. Eine Differenz zwischen der tatsächlichen Haspelhöhe und dem Sollwert wird dann während der folgenden Erntefahrt als Offset für die Einstellung der tatsächlichen Haspelhöhe genutzt. Die tatsächlich eingestellte Haspelhöhe der Haspel entspricht dann nicht der optimalen Haspelhöhe, sondern der optimalen Haspelhöhe verringert um den Offset.

Das Verfahren sieht in einer bevorzugten Ausführungsform zudem vor, dass die Schneidtischtiefe in Abhängigkeit von der tatsächlichen Haspelhöhe oder der Bestandshöhe eingestellt wird. Dies erfolgt bevorzugt, wenn die Änderung der Bestandshöhe einen zweiten Schwellwert überschreitet. Die Einstellung der Schneidtischtiefe ist weniger häufig erforderlich, als die der Haspelhöhe. Daher ist es dabei bevorzugt, dass der zweite Schwellwert größer als der erste Schwellwert ist.

Die Schneidtischtiefe wird vorzugsweise auch bei Änderung der Haspelhorizontalposition und/oder der Schneidwerkshöhe korrigiert, um einerseits Gutstaus am Schneidtisch und andererseits Spritzkörnerverluste zu vermeiden.

Das Verfahren ermöglicht erstmalig eine automatische Anpassung der Haspelhöhe anhand von erfassten Daten der Bestandshöhe des Erntegutbestandes eines Feldes. Zudem wird die Einstellung der bisher nur manuell einstellbaren Schneidtischtiefe automatisiert. Insgesamt wird der Bediener des Mähdreschers dadurch während der Erntefahrt erheblich entlastet und die Spritzkörnerverluste können deutlich verringert werden.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: in (a) einen erfindungsgemäßen Mähdrescher mit einem Schneidwerk, in (b) das Schneidwerk, und in 1 (c) eine Datenverarbeitungseinheit, eine Steuerungs- und Regelungseinheit sowie eine Bedienerschnittstelle des Mähdreschers schematisch; und
- Fig. 2: in (a) eine optimale Haspelhöhe sowie eine tatsächliche Haspelhöhe, sowie in (b) schematisch eine Verstellung der Haspelhöhe.

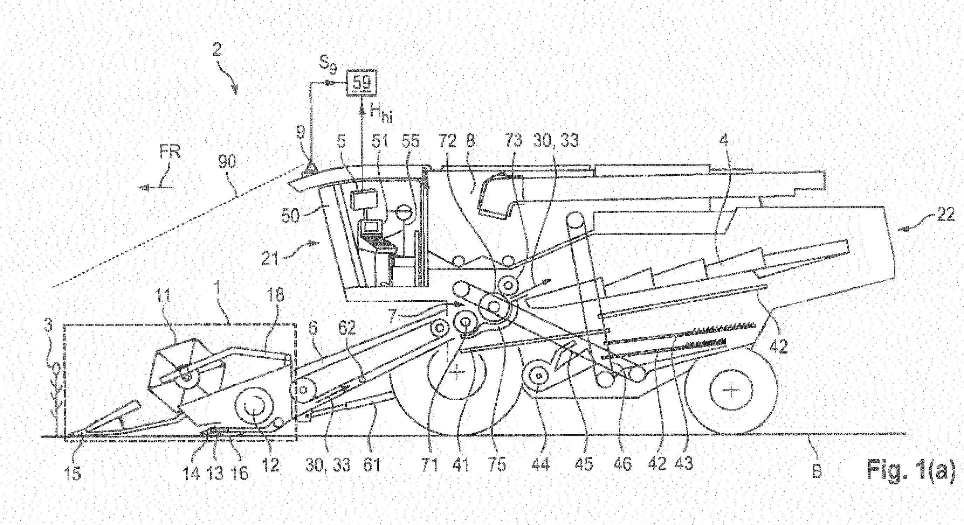

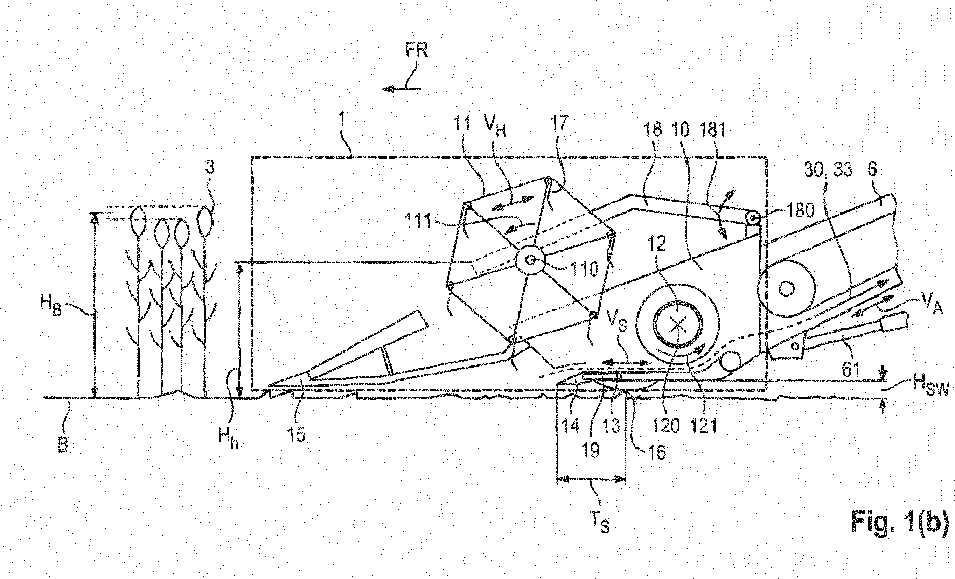

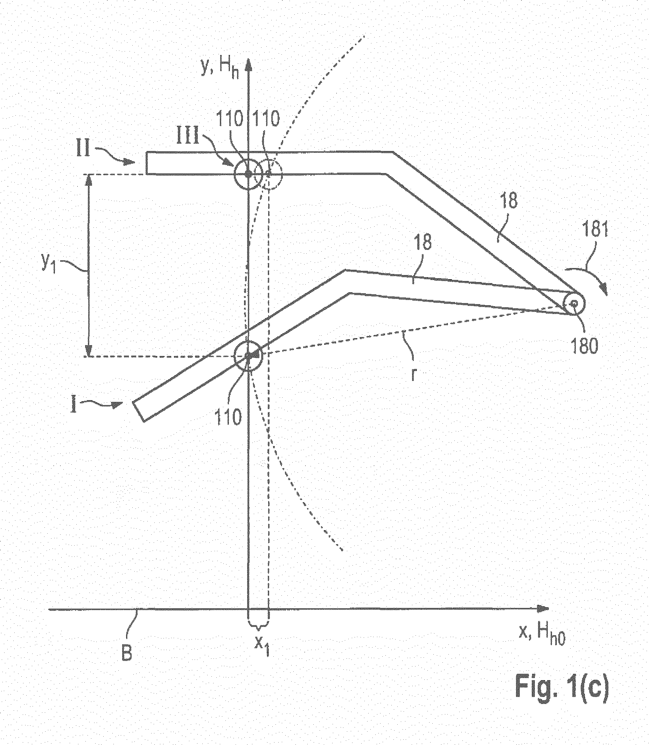

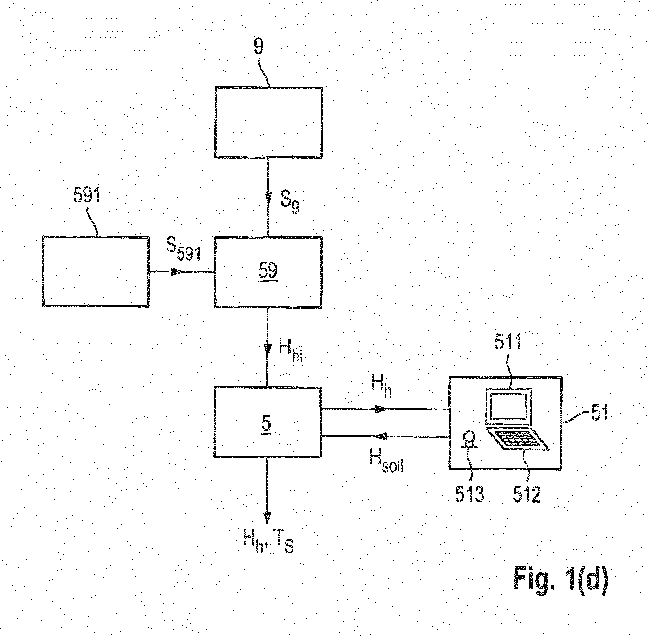

Figur 1 zeigt in (a) eine selbstfahrende landwirtschaftliche Erntemaschine 2, hier einen Mähdrescher. Die Begriffe Mähdrescher und selbstfahrende landwirtschaftliche Erntemaschine 2 werden im Folgenden synonym verwendet. Eine Fahrtrichtung des Mähdreschers 2 ist durch einen Pfeil FR gezeigt.

Der Mähdrescher 2 weist eine Frontseite 21 auf, an der eine Fahrerkabine 50 für einen Bediener 55 angeordnet ist. Zudem ist an der Frontseite 21 als Vorsatzgerät ein Schneidwerk 1 angeordnet, welches Erntegut 3 aufnimmt. Das Schneidwerk 1 leitet das Erntegut 3 an einen Schrägförderer 6, über den es als Gutstrom 33 in eine Förderrichtung 30 an ein Dreschwerk 7 geleitet wird. Das hier dargestellte herkömmliche Dreschwerk 7 weist drei Trommeln 71 - 73 auf, nämlich eine Vordreschtrommel 71, die einer Dreschtrommel 72 vorgelagert ist, die Dreschtrommel 72 sowie eine der Dreschtrommel 72 nachgelagerte Umlenktrommel 73. Die Vordreschtrommel 71 ist zum Vordreschen des Erntegutes 3 sowie zum Zuführen des Erntegutes 3 an die Dreschtrommel 72 vorgesehen, die Dreschtrommel 72 drischt das Erntegut 3, und die Umlenktrommel 73 übergibt das Erntegut 3 einer Nachbearbeitungseinrichtung 4, hier einem Hordenschüttler, der zum Reinigen des Erntegutes 3 vorgesehen ist.

Unterhalb des Dreschwerks 7 ist ein Dreschkorb 75 angeordnet, durch den bereits gelöstes Korn aus dem Erntegutstrom 33 abgeschieden wird.

Die im Dreschwerk 7 und der Nachbearbeitungseinrichtung 4 abgeschiedenen Körner werden über einen Rücklaufboden 42 und einen Zuführboden 41 einer mehrere Reinigungssiebe 43 und ein Gebläse 44 umfassenden Reinigungseinrichtung (nicht bezeichnet) zugeführt. Die gereinigten Körner werden anschließend über einen Kornelevator 46 in einen Korntank 8 geleitet. Größere Bestandteile des Gutstromes 33, die nicht durch die Reinigungssiebe 43 fallen können, werden dem Dreschwerk 7 über einen Überkehrelevator 45 erneut zugeführt. Stroh und Spreu (nicht bezeichnet) werden an der Heckseite 22 des Mähdreschers 2 auf dem Boden (nicht bezeichnet) abgelegt oder verteilt.

In einer Fahrerkabine 50 des Mähdreschers 2 ist eine Bedienerschnittstelle 51 für einen Bediener 55 des Mähdreschers angeordnet, die zum Einstellen und zum Anzeigen von Parametern des Mähdreschers 2 und/oder des Erntegutes 3 und/oder der Erntebedingungen vorgesehen ist. Die Bedienerschnittstelle 51 ist mit einer Steuereinheit 5 verbunden, die zum Steuern des Mähdreschers 2 vorgesehen ist. Anzeigbare und/oder einstellbare Parameter des Mähdreschers 2 sind beispielsweise eine Fahrgeschwindigkeit, der Kraftstoffverbrauch, sowie Betriebs- und/oder Einstellungsparameter eines Arbeitsaggregates des Mähdreschers 2.

Das Schneidwerk 1 ist mittels eines am Schrägförderer 6 angeordneten Aktors 61 höhenverstellbar, um es an Bodenunebenheiten des Bodens B und/oder die Erntebedingungen anpassen zu können. Insbesondere kann eine Schneidwerkshöhe Hsw (s. Fig. 1 (b)) bei einem Wechsel von liegendem Erntegut 3 zu stehendem Erntegut 3 oder umgekehrt angepasst werden. Dafür wird der Aktor 61 in oder gegen eine Verstellrichtung V_{A} verkürzt oder verlängert, so dass der Schrägförderer 6 abgesenkt oder angehoben wird. Das am Schrägförderer 6 angeordnete Schneidwerk 1 wird dann mit dem Schrägförderer 6 verstellt.

An der Fahrerkabine 50 ist ein Vorfeldsensor 9 angeordnet. Damit dieser das Erntegut 3 vor dem Schneidwerk 1 entlang seiner gesamten Breite (nicht gezeigt) quer zur Fahrtrichtung FR erfassen kann, ist der Vorfeldsensor 9 mittig an der Fahrerkabine 50 angeordnet und sendet einen Sensorstrahl 90 vor das Schneidwerk 1 auf das Erntegut 3. Nach herkömmlichen Methoden wird eine Reflexion des Sensorstrahls 90 mit dem Sensor 9 erfasst. Der Sensor 9 sendet ein der erfassten Reflexion entsprechendes Sensorsignal S9 dann an eine Datenverarbeitungseinheit 59 des Mähdreschers 2, die hier nur schematisch dargestellt ist.

In der Datenverarbeitungseinheit 59 wird aus dem Sensorsignal S9 eine Bestandshöhe Hb ermittelt. Die Erfassung erfolgt zyklisch über die gesamte Breite des Schneidwerks 1 und vorzugsweise während der gesamten Erntefahrt.

Die Bestandshöhe Hb beschreibt eine Länge des Erntegutes 3 vom Boden aus gemessen. Da die Bestandshöhe Hb über die Schneidwerksbreite schwankt, wird aus den Sensorsignalen S9 ein Mittelwert für die Bestandshöhe Hb ermittelt. Der Mittelwert für die Bestandshöhe Hb ist schematisch in Fig. 1 (b) dargestellt.

Anhand dieser erfassten Daten für die Bestandshöhe Hb kann die Datenverarbeitungseinheit 59 eine optimale Haspelhöhe Hhi der Haspel 13 berechnen.

Das Schneidwerk 1 wird anhand der Fig. 1 (b) beschrieben. Am Schneidwerk 1 sind Halmteiler 15 vorgesehen, die das Erntegut 3 während der Erntefahrt in einen innerhalb des Schneidwerks 1 angeordneten Teil und einen außerhalb des Schneidwerks 1 angeordneten Teil teilen. Die Halmteiler 15 sind in Fahrtrichtung FR vorne am Schneidwerk 1 angeordnet. Jeweils ein Halmteiler 15 ist dabei an einer das Schneidwerk 1 quer zur Fahrtrichtung FR begrenzenden Seitenwand 10 eines Gehäuses (nicht bezeichnet) des Schneidwerks 1 vorgesehen.

Zwischen den Seitenwänden 10 ist in Fahrtrichtung FR hinter den Halmteilern 15 ein Schneidtisch 13 angeordnet. Der Schneidtisch 13 erstreckt sich von einer der das Schneidwerk 1 begrenzenden Seitenwand 10 zur anderen Seitenwand 10. Eine Schneidwerksbreite ist daher durch einen Abstand der beiden Seitenwände 10 voneinander bestimmt. Am Schneidtisch 13 ist ein Messerbalken 19 zum Schneiden des Erntegutes 3 angeordnet. Am Messerbalken 19 sind zudem Ährenheber 14 angeordnet. Der Schneidtisch 13 ist mit dem Messerbalken 19 und den Ährenhebern 14 in und gegen eine Verstellrichtung Vs verstellbar. Dadurch ändert sich seine Schneidtischtiefe Ts.

Etwa oberhalb des Schneidtischs 13 und/oder in Fahrtrichtung FR dahinter ist eine Querförderschnecke 12 angeordnet, mit der das vom Messerbalken 19 geschnittene Erntegut 3 zur Mitte (nicht dargestellt) des Schneidwerks 1 gefördert wird. Dafür ist die Querförderschnecke 12 in eine Drehrichtung 121 um eine Drehachse 120 drehbar zwischen den Seitenwänden 10 gelagert. Mittig des Schneidwerks 1 ist der Schrägförderer 6 angeordnet, durch den das Erntegut 3 dann als Erntegutstrom 33 in eine Förderrichtung 30 weiter in den Mähdrescher 2 hinein förderbar ist.

Im Schrägförderer 6 ist ein Durchsatzsensor 62 (s. Fig. 1 (a)) angeordnet, mit dem der Erntegutdurchsatz ermittelbar ist.

Unterhalb des Schneidwerks 1 sind Tastbügel 16 vorgesehen, mit denen ein Abstand Hsw, im Folgenden auch als Höhe bezeichnet, des Schneidwerks 1 vom Boden B erfassbar ist. Bei Bodenunebenheiten werden diese mit den Tastbügeln 16 erfasst und das Schneidwerk 1 kann entsprechend angehoben werden.

Das Schneidwerk 1 weist zudem eine Haspel 11 auf. Die Haspel 11 ist an einem Haspelarm 18 um eine Schwenkachse 180 in und gegen eine Schwenkrichtung 181 schwenkbar am Gehäuse des Schneidwerks 1 angeordnet. Sie ist an einem in Fahrtrichtung FR vorderen Teil (nicht bezeichnet) des Haspelarms 18 in und gegen eine Verschieberichtung V_{H} verschiebbar am Haspelarm 18 befestigt. Zudem ist sie in und gegen eine Haspeldrehrichtung 111 drehbar um eine Haspelachse 110 angeordnet. Die Haspelachse 110 und die Schwenkachse 180 erstrecken sich quer zur Fahrtrichtung FR. An der Haspel 11 sind über die Schneidwerksbreite und gleichmäßig in Haspeldrehrichtung 111 um die Haspelachse 110 verteilt Haspelzinken 17 angeordnet. Die Haspelzinken 17 sind dafür vorgesehen, bei einem Drehen der Haspel 11 um die Haspelachse 110 in den Erntegutbestand 3 einzutauchen und das Erntegut 3 dadurch zum Schneidtisch 13 hin, das heißt gegen die Fahrtrichtung FR, zu neigen. Bei liegendem Erntegut 3 sind sie dafür vorgesehen, dieses anzuheben, um ein Schneiden zu vereinfachen.

Eine tatsächliche Haspelhöhe Hh, das ist ein Abstand der Haspelachse 110 vom Boden B, ist durch Schwenken des Haspelarms 18 um die Haspelachse 180 verstellbar. Da die Haspel 11 dabei entlang eines Radius r um die Haspelachse 180 geschwenkt wird, ändert sich dabei gleichzeitig eine horizontale Position Hho der Haspel 11. Die horizontale Position der Haspel 11 ist im Folgenden auch Haspelhorizontale Hho bezeichnet. Dies zeigt Fig. 1 (c).

Um die Haspelhorizontale Hho zu verändern, wird die Haspel 11 in oder gegen die Verschieberichtung V_{H} entlang dem Haspelarm 18 verschoben. Dabei ändert sich aus demselben Grund auch die tatsächliche Haspelhöhe Hh.

Um das Verstellen der Haspel 11 für den Bediener 55 zu vereinfachen, wird es an der Bedienerschnittstelle 51 in kartesischen Koordinaten x, y gezeigt, und ist für den Bediener 55 dort auch anhand von kartesischen Koordinaten x, y verstellbar.

Fig. 1 (c) zeigt schematisch das Verstellen der Haspel 11 durch Drehen des Haspelarms 18 um die Schwenkachse 180. Dabei wird der Haspelarm 18 von einer ersten Position I in eine zweite Position II verstellt. Die Haspel 11 wird dabei entlang des Radius r um die Schwenkachse 180 verstellt. Sie ändert dabei ihre tatsächliche Haspelhöhe Hh um einen Differenzbetrag y1.

Um ein geradliniges Verstellen in y- Richtung der kartesischen Koordinaten x, y darzustellen, muss die Haspel 11 zudem in Verschieberichtung V_{H} um einen Differenzbetrag x1 entlang des Haspelarms 18 verschoben werden. Die Haspel 11 befindet sich dann in der mit III bezeichneten Position.

Eine Änderung der Haspelhorizontale Hho, das heißt eine Änderung in oder gegen die x-Richtung der kartesischen Koordinaten x, y, und eine Änderung der tatsächlichen Haspelhöhe Hh, das heißt eine Änderung in oder gegen die y- Richtung der kartesischen Koordinaten x, y, wird daher durch ein Drehen des Haspelarms 18 um die Schwenkachse 180 und ein Verschieben der Haspel 11 entlang dem Haspelarm 18 realisiert. Lediglich in der zweiten Position II, in der der Teil des Haspelarms 18, entlang dem die Haspel 11 verstellbar ist, sich horizontal erstreckt, ist eine Änderung des Haspelhorizontale Hho ohne eine zusätzliche Änderung der tatsächlichen Haspelhöhe Hh möglich.

Fig. 1 (d) zeigt einen Ausschnitt aus dem Mähdrescher 2 schematisch. Dargestellt sind die Datenverarbeitungseinheit 59, die Steuerungs- und Recheneinheit 5 sowie die Bedienerschnittstelle 51.

Die Datenverarbeitungseinheit 59 erhält von einem Vorfeldsensor 9 Sensordaten S9, aus denen sie die Bestandshöhe Hb ermittelt. Aus der Bestandshöhe Hb berechnet sie dann die optimale Haspelhöhe Hhi. Alternativ oder zusätzlich kann sie einen Datenspeicher 591 umfassen, in dem die Daten der Bestandshöhe Hb bereits erfasst sind. Diese können ebenfalls an die Datenverarbeitungseinheit 59 übermittelt werden, um aus ihnen die optimale Haspelhöhe Hhi zu berechnen.

Die optimale Haspelhöhe Hhi wird dann an die Steuerungs- und Regelungseinheit 5 übermittelt. Diese ist dazu eingerichtet, die tatsächliche Haspelhöhe Hh automatisch in Abhängigkeit von der optimalen Haspelhöhe Hhi einzustellen.

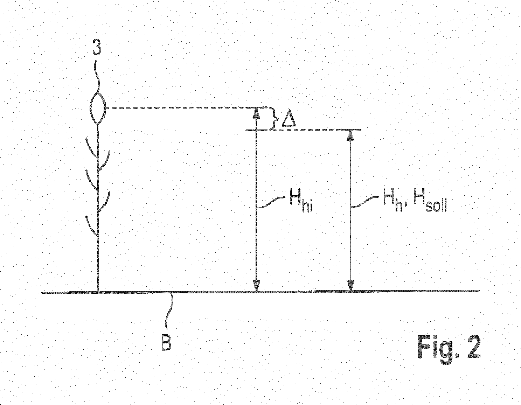

Um dem Bediener 55 die Möglichkeit zu geben, die tatsächliche Haspelhöhe Hh gemäß eigenen Vorstellungen zu korrigieren, sieht die Bedienerschnittstelle 51 nicht nur Anzeigemittel 511 sondern zudem Eingabemittel 512, 513 vor. Die Eingabemittel 512, 513 umfassen einen Schalter 513, mit dem die tatsächliche Haspelhöhe Hh auf einen Sollwert H_{Soll} korrigierbar ist. Dies zeigt Fig. 2 schematisch.

Die tatsächliche Haspelhöhe Hh unterscheidet sich dann von der idealen Haspelhöhe Hhi um einen Offset Δ. Dieser Offset Δ wird für die folgende Erntefahrt zur Korrektur der tatsächlichen Haspelhöhe Hh genutzt. Er wird fortan auf die optimale Haspelhöhe Hhi aufsummiert, so dass diese dann um den Offset Δ größer oder kleiner ist.

Eine Korrektur der optimalen Haspelhöhe Hhi wird vorgenommen, wenn der Durchflusssensor 62 eine lichte Bestandsdichte anzeigt. Dafür wird der aufgrund der erfassten optimalen Haspelhöhe Hh tatsächlich zu erwartende Durchfluss statistisch ermittelt. Ist der gemessene Durchfluss geringer, zeigt dies eine geringere Bestandsdichte an. Die optimale Haspelhöhe Hhi wird dann um einen entsprechenden Betrag verringert.

Bei einer Änderung der tatsächlichen Haspelhöhe Hh wird auch die Schneidtischtiefe Ts des Schneidtisches 13 verstellt. Dies erfolgt aber nur, wenn die Änderung der Bestandshöhe Hb einen zweiten Schwellwert überschreitet, der bevorzugt größer als der erste Schwellwert ist. Die Veränderung der Schneidtischtiefe Ts ist nur bei starken Schwankungen der Bestandshöhe Hb erforderlich. Durch den zweiten Schwellwert wird ein ständiges Verstellen des Schneidtisches 13 vermieden.

Die Steuerungs- und Regelungseinheit 5 ist bevorzugt Bestandteil eines Schneidwerksautomaten (nicht gezeigt). Ein solcher Schneidwerksautomat weist einen Datenspeicher (nicht gezeigt)auf, in dem Prozessstrategien hinterlegt sind, gemäß derer die Steuerungs- und Regelungseinheit 5 das Schneidwerk 1 steuert oder regelt.

Das Einstellen der tatsächlichen Bestandshöhe Hh erfolgt hier gemäß zumindest drei unterschiedlichen Prozessstrategien, nämlich den Prozessstrategien für stehenden Bestand, liegenden Bestand und Wendemanöver.
- Bei stehendem Bestand wird die tatsächliche Haspelhöhe Hh etwa auf Höhe der Ähren oder nur geringfügig tiefer gehalten, so dass die Haspelzinken 17 entlang der gesamten Schneidwerksbreite in das Erntegut 3 eintauschen. Die Schneidtischtiefe Ts entspricht dabei etwa der tatsächlichen Haspelhöhe Hh.
- Bei liegendem Bestand wird die tatsächliche Haspelhöhe Hh auf einen Wert geringfügig oberhalb des Bodens B eingestellt.
- Bei einem Wendemanöver am Vorgewende wird das Schneidwerk 1 angehoben und die Haspel 11 auf eine sehr geringe tatsächliche Haspelhöhe Hh eingestellt. Dadurch wird eine Kollision der Haspel 11 mit der Fahrerkabine 50 vermieden.

### Bezugszeichenliste

- 1: Vorsatzgerät, Schneidwerk
- 10: Seitenwand
- 11: Haspel
- 110: Haspelachse
- 111: Haspeldrehrichtung
- 12: Querförderschnecke
- 120: Schneckenachse
- 121: Schneckendrehrichtung
- 13: Schneidtisch
- 14: Ährenheber
- 15: Halmteiler
- 16: Tastbügel
- 17: Haspelzinken
- 18: Hebearm
- 180: Schwenkachse
- 181: Schwenkrichtung
- 19: Messerbalken
- 2: Mähdrescher
- 21: Frontseite
- 22: Heckseite
- 3: Erntegut
- 30: Förderrichtung
- 33: Erntegutstrom
- 4: Nachbearbeitungseinrichtung
- 41: Zuführboden
- 42: Rücklaufboden
- 43: Reinigungssieb
- 44: Gebläse
- 45: Überkehrelevator
- 46: Kornelevator
- 5: Steuereinheit
- 50: Fahrerkabine
- 51: Bedienerschnittstelle
- 511: Anzeigemittel
- 512: Eingabemittel
- 513: Eingabemittel, Schalter
- 55: Bediener
- 59: Datenspeichverarbeitungseinheit
- 591: Datenspeicher
- S591: Datensignal
- 6: Schrägförderer
- 61: Aktor
- 62: Durchflusssensor
- 7: Dreschwerk
- 71: Zuführtrommel
- 72: Dreschtrommel
- 73: Wendetrommel
- 75: Dreschkorb
- 8: Korntank
- 9: Vorfeldsensor
- S9: Sensorsignal
- 90: Sensorstrahl
- FR: Fahrtrichtung
- Vh: Verschieberichtung Haspel
- Vs: Verschieberichtung Schneidtisch
- Va: Verschieberichtung Aktor
- B: Boden
- Hb: Bestandshöhe
- Hh: Haspelhöhe
- Hho: Haspelhorizontalposition
- Hsw: Schneidwerkhöhe
- H_{Soll}: Sollwert
- Ts: Schneidtischtiefe
- I - III: Haspelposition
- x, y: Kartesische Koordinaten
- x1, y1: Differenzbetrag

## Patentansprüche

1. Selbstfahrender Mähdrescher (2)
• mit einem Schneidwerk (1), das eine Haspel (11) aufweist, die zum Neigen des Erntegutes (3) in Richtung des Mähdreschers (2) vorgesehen ist,
• eine Datenverarbeitungseinheit (59), die zur Erfassung und/oder Verarbeitung von Daten vorgesehen ist, und
• mit einer Steuerungs- und Regelungseinheit (5), die zum Steuern des Mähdreschers (2) vorgesehen ist,
**dadurch gekennzeichnet, dass**
• die Datenverarbeitungseinheit (59) dazu ausgebildet ist, eine optimale Haspelhöhe (Hhi) der Haspel (11) in Abhängigkeit von erfassten Daten der Bestandshöhe (Hb) zu ermitteln, und
• die Steuerungs- und Regelungseinheit (5) dazu ausgebildet ist, eine tatsächliche Haspelhöhe (Hh) automatisch in Abhängigkeit von der optimalen Haspelhöhe (Hhi) einzustellen, und
• die Steuerungs- und Regelungseinheit (5) dazu ausgebildet ist, die tatsächliche Haspelhöhe (Hh) zu verändern, wenn eine Änderung der Bestandshöhe (Hb) einen ersten Schwellwert überschreitet.

2. Mähdrescher (2) nach einem der vorhergehenden Ansprüche, **dadurch gekennzeichnet, dass** die tatsächliche Haspelhöhe (Hh) in Abhängigkeit von einem, insbesondere manuell eingebbaren, Sollwert (HSoll ) eingestellt wird.

3. Mähdrescher (2) nach einem der vorhergehenden Ansprüche, **dadurch gekennzeichnet, dass** das Schneidwerk (1) einen Schneidtisch (13) umfasst, an dem ein Messerbalken (19) zum Schneiden des Erntegutes (3) angeordnet ist, wobei der Schneidtisch (13) in und gegen eine Verstellrichtung (Vs) verstellbar ist, so dass sich seine Schneidtischtiefe (Ts) ändert, und dass die Steuerungs- und Regelungseinheit (5) dazu ausgebildet ist, die Schneidtischtiefe (Ts) in Abhängigkeit von der tatsächlichen Haspelhöhe (Hh) oder der Bestandshöhe (Hb) einzustellen.

4. Mähdrescher (2) nach einem der vorhergehenden Ansprüche, **dadurch gekennzeichnet, dass**, die Steuerungs- und Regelungseinheit (5) dazu ausgebildet ist, die Schneidtischtiefe (Ts) bei einer Änderung der tatsächlichen Haspelhöhe (Hh) zu ändern, wenn die Änderung der Bestandshöhe (Hb) einen zweiten Schwellwert überschreitet.

5. Mähdrescher (2) nach einem der vorhergehenden Ansprüche, **dadurch gekennzeichnet, dass** der zweite Schwellwert größer als der erste Schwellwert ist.

6. Mähdrescher (2) nach einem der vorhergehenden Ansprüche, **dadurch gekennzeichnet, dass** die Steuerungs- und Regelungseinheit (5) dazu ausgebildet ist, die tatsächliche Haspelhöhe (Hh) verlangsamt einzustellen, wenn eine Änderung der Bestandshöhe (Hb) einen dritten Schwellwert, der größer als der erste Schwellwert ist, überschreitet,

7. Mähdrescher (2) nach einem der vorhergehenden Ansprüche, **dadurch gekennzeichnet, dass** er einen Durchlasssensor (62) oder einen Schichtdickensensor, insbesondere in einem Schrägförderer (6), umfasst, und die Steuerungs- und Regelungseinheit (5) dazu ausgebildet ist, die optimale Bestandshöhe (Hb) in Abhängigkeit von den erfassten Daten des Durchlasssensors (62) oder Schichtdickensensors zu korrigieren.

8. Mähdrescher (2) nach einem der vorhergehenden Ansprüche, **dadurch gekennzeichnet, dass** die Steuerungs- und Regelungseinheit (5) Bestandteil eines Schneidwerksautomaten ist, und das Einstellen der tatsächlichen Bestandshöhe (Hh) gemäß Prozessstrategien des Schneidwerksautomaten erfolgt,

9. Mähdrescher (2) nach einem der vorhergehenden Ansprüche, **dadurch gekennzeichnet, dass**
• entweder der Mähdrescher (2) zur Erfassung der Daten der Bestandshöhe (Hb) einen Vorfeldsensor (9) umfasst, und die Datenverarbeitungseinheit (59) dazu ausgebildet ist, die Bestandshöhe (Hb) anhand der vom Vorfeldsensor (9) erfassten Daten zu ermitteln,
• oder die Datenverarbeitungseinheit (59) einen Datenspeicher umfasst, in der die erfassten Daten der Bestandshöhe (Hb) hinterlegt sind.

10. Mähdrescher (2) nach einem der vorhergehenden Ansprüche, **dadurch gekennzeichnet, dass** die Bedienerschnittstelle (51) Ausgabemittel (511) und Eingabemittel (512, 513) für den Bediener (55) umfasst, und dass die Eingabe und/oder Anzeige einer Position (III) und/oder einer Änderung der Position (III) der Haspel (11) in geradlinigen Koordinaten (x, y) erfolgt.

11. Verfahren zum Steuern einer Haspel (11) eines Mähdreschers (2), insbesondere nach einem der vorherigen Ansprüche, bei dem
• Eine optimale Haspelhöhe (Hhi) in Abhängigkeit von erfassten Daten der Bestandshöhe (Hb) ermittelt wird, und
• Eine tatsächliche Haspelhöhe (Hh) der Haspel (13) automatisch anhand der optimalen Haspelhöhe (Hhi) eingestellt wird, wenn eine Änderung der Bestandshöhe (Hb) einen ersten Schwellwert überschreitet,

12. Verfahren nach Anspruch 11, **dadurch gekennzeichnet, dass** die tatsächliche Haspelhöhe (Hh) zudem in Abhängigkeit von einem, insbesondere manuell eingestellten, Sollwert (HSoll ) erfolgt.

13. Verfahren nach einem der Ansprüche 11 - 12, **dadurch gekennzeichnet, dass** die Schneidtischtiefe (Ts) in Abhängigkeit von der tatsächlichen Haspelhöhe (Hh) oder der Bestandshöhe (Hb) eingestellt wird, insbesondere wenn die Änderung der Bestandshöhe (Hb) einen zweiten Schwellwert, insbesondere der größer als der erste Schwellwert ist, überschreitet.

## Claims

1. A self-propelled combine harvester (2) comprising
- header (1) which has a reel (11) provided for inclining the crop material (3) in the direction of the combine harvester (2),
- a data processing unit (59) provided for detecting and/or processing data, and
- an open-loop and closed-loop control unit (5) provided for controlling the combine harvester (2),
**characterised in that**
- the data processing unit (59) is adapted to ascertain an optimum reel height (Hhi) of the reel (11) in dependence on detected data of the crop stand height (Hb),
- the open-loop and closed-loop control unit (5) is adapted to set an actual reel height (Hh) automatically in dependence on the optimum reel height (Hhi), and
- the open-loop and closed-loop control unit (5) is adapted to change the actual reel height (Hh) when a change in the crop stand height (Hb) exceeds a first threshold value.

2. A combine harvester (1) according to claim 1 **characterised in that** the actual reel height (Hh) is set in dependence on a target value (HSoll) which in particular can be input manually.

3. A combine harvester (2) according to one of the preceding claims **characterised in that** the header (1) includes a cutting table (3) on which is arranged a cutter bar (19) for cutting the crop material (3), wherein the cutting table (13) is displaceable in and in opposite relationship to a displacement direction (Vs) so that its cutting table depth (Ts) changes and that the open-loop and closed-loop control unit (5) is adapted to set the cutting table depth (Ts) in dependence on the actual reel height (Hh) or the crop stand height (Hb).

4. A combine harvester (2) according to one of the preceding claims **characterised in that** the open-loop and closed-loop control unit (5) is adapted to change the cutting table depth (Ts) upon a change in the actual reel height (Hh) when the change in the crop stand height (Hb) exceeds a second threshold value.

5. A combine harvester (2) according to one of the preceding claims **characterised in that** the second threshold value is greater than the first threshold value.

6. A combine harvester (2) according to one of the preceding claims **characterised in that** the open-loop and closed-loop control unit (5) is adapted to set the actual reel height (Hh) at a reduced speed when a change in the crop stand height (Hb) exceeds a third threshold value which is greater than the first threshold value.

7. A combine harvester (2) according to one of the preceding claims **characterised in that** it includes a pass-through sensor (62) or a layer thickness sensor, in particular in an inclined conveyor (6), and the open-loop and closed-loop control unit (5) is adapted to correct the optimum crop stand height (Hb) in dependence on the detected data of the pass-through sensor (62) or the layer thickness sensor.

8. A combine harvester (2) according to one of the preceding claims **characterised in that** the open-loop and closed-loop control unit (5) is a component part of an automatic header mechanism and setting of the actual crop stand height (Hh) is effected in accordance with process strategies of the automatic header mechanism.

9. A combine harvester (2) according to one of the preceding claims **characterised in that**
- either the combine harvester (2) includes a forefield sensor (9) for detecting the data of the crop stand height (Hb) and the data processing unit (59) is adapted to ascertain the crop stand height (Hb) on the basis of the data detected by the forefield sensor (9), or
- the data processing unit (59) includes a data storage means in which the detected data of the crop stand height (Hb) are stored.

10. A combine harvester (2) according to one of the preceding claims **characterised in that** the operator interface (51) includes output means (511) and input means (512, 513) for the operator (55) and that the input and/or display of a position (III) and/or a change in the position (III) of the reel (11) is effected in straight-line co-ordinates (x, y).

11. A method of controlling a reel (11) of a combine harvester (2), in particular according to one of the preceding claims, in which
- an optimum reel height (Hhi) is ascertained in dependence on detected data of the crop stand height (Hb), and
- an actual reel height (Hh) of the reel (13) is automatically set on the basis of the optimum reel height (Hhi) when a change in the crop stand height (Hb) exceeds a first threshold value.

12. A method according to claim 11 **characterised in that** the actual reel height (Hh) is also effected in dependence on a target value (HSoll) which in particular is set manually.

13. A method according to one of claims 11 and 12 **characterised in that** the cutting table depth (Ts) is set in dependence on the actual reel height (Hh) or the crop stand height (Hb), in particular when the change in the crop stand height (Hb) exceeds a second threshold value, in particular which is greater than the first threshold value.

## Revendications

1. Moissonneuse-batteuse automotrice (2)
• comprenant un tablier de coupe (1) qui comporte un rabatteur (11), lequel est prévu pour incliner le produit récolté (3) en direction de la moissonneuse-batteuse (2),
• une unité de traitement de données (59) qui est prévue pour recueillir et/ou traiter des données, et
• comprenant une unité de commande et de régulation (5) qui est prévue pour commander la moissonneuse-batteuse (2)
**caractérisée en ce que**
• l'unité de traitement de données (59) est conçue pour déterminer une hauteur de rabatteur optimale (Hhi) du rabatteur (11) en fonction de données recueillies de la hauteur de culture (Hb), et
• l'unité de commande et de régulation (5) est conçue pour instaurer automatiquement une hauteur de rabatteur réelle (Hh) en fonction de la hauteur de rabatteur optimale (Hhi).
• l'unité de commande et de régulation (5) est conçue pour modifier la hauteur de rabatteur réelle (Hh) lorsqu'une modification de la hauteur de culture (Hb) surpasse une première valeur seuil.

2. Moissonneuse-batteuse (2) selon une des revendications précédentes, **caractérisée en ce que** la hauteur de rabatteur réelle (Hh) est instaurée en fonction d'une valeur de consigne, en particulier saisissable manuellement, (Hₛₒₗₗ).

3. Moissonneuse-batteuse (2) selon une des revendications précédentes, **caractérisée en ce que** le tablier de coupe (1) comprend une table de coupe (13) sur laquelle est disposée une barre porte-lames (19) pour couper le produit récolté (3), la table de coupe (13) étant réglable dans une et à l'opposé d'une direction de réglage (Vs), de façon qu'une profondeur de table de coupe (Ts) soit modifiée, et **en ce que** l'unité de commande et de régulation (5) est conçue de façon à régler la profondeur de table de coupe (Ts) en fonction de la hauteur de rabatteur réelle (Hh) ou de la hauteur de culture (Hb).

4. Moissonneuse-batteuse (2) selon une des revendications précédentes, **caractérisée en ce que** l'unité de commande et de régulation (5) est conçue pour modifier la profondeur de table de coupe (Ts) en cas de modification de la hauteur de rabatteur réelle (Hh) lorsque la modification de la hauteur de culture (Hb) surpasse une seconde valeur seuil.

5. Moissonneuse-batteuse (2) selon une des revendications précédentes, **caractérisée en ce que** la seconde valeur seuil est supérieure à la première valeur seuil.

6. Moissonneuse-batteuse (2) selon une des revendications précédentes, **caractérisée en ce que** l'unité de commande et de régulation (5) est conçue pour instaurer la hauteur de rabatteur réelle (Hh) au ralenti lorsqu'une modification de la hauteur de culture (Hb) surpasse une troisième valeur seuil qui est supérieure à la première valeur seuil.

7. Moissonneuse-batteuse (2) selon une des revendications précédentes, **caractérisée en ce qu'**elle comprend un capteur de passage (62) ou un capteur d'épaisseur de couche, en particulier dans un convoyeur incliné (6), et l'unité de commande et de régulation (5) est conçue pour corriger la hauteur de culture optimale (Hb) en fonction des données recueillies du capteur de passage (62) ou du capteur d'épaisseur de couche.

8. Moissonneuse-batteuse (2) selon une des revendications précédentes, **caractérisée en ce que** l'unité de commande et de régulation (5) fait partie d'un automate de tablier de coupe, et l'instauration de la hauteur de culture réelle (Hh) s'effectue selon des stratégies de processus de l'automate de tablier de coupe.

9. Moissonneuse-batteuse (2) selon une des revendications précédentes, **caractérisée en ce que**
• soit la moissonneuse-batteuse (2) comprend, pour recueillir des données de la hauteur de culture (Hb), un capteur de zone d'approche (9) et l'unité de traitement de données (59) est conçue pour déterminer la hauteur de culture (Hb) à l'aide des données recueillies par le capteur de zone d'approche (9),
• soit l'unité de traitement de données (59) comprend une mémoire de données dans laquelle les données recueillies de la hauteur de culture (Hb) sont enregistrées.

10. Moissonneuse-batteuse (2) selon une des revendications précédentes, **caractérisée en ce que** l'interface utilisateur (51) comprend des moyens de sortie (511) et des moyens d'entrée (512, 513) pour l'utilisateur (55), et **en ce que** l'entrée et/ou l'affichage d'une position (III) et/ou d'une modification de la position (III) du rabatteur (11) s'effectuent selon des coordonnées rectilignes (x, y).

11. Procédé pour commander un rabatteur (11) d'une moissonneuse-batteuse (2), en particulier selon une des revendications précédentes, dans lequel
• une hauteur de rabatteur optimale (Hhi) est déterminée en fonction de données recueillies de la hauteur de culture (Hb), et
• une hauteur de rabatteur réelle (Hh) du rabatteur (13) est instaurée automatiquement à l'aide de la hauteur de rabatteur optimale (Hhi) lorsqu'une modification de la hauteur de culture (Hb) surpasse une première valeur seuil.

12. Procédé selon la revendication 12, **caractérisé en ce que** la hauteur de rabatteur réelle (Hh) s'effectue en outre en fonction d'une valeur de consigne, en particulier instaurée manuellement, (Hₛₒₗₗ).

13. Procédé selon une des revendications 11-12, **caractérisé en ce que** la profondeur de table de coupe (Ts) est instaurée en fonction de la hauteur de rabatteur réelle (Hh) ou de la hauteur de culture (Hb), en particulier lorsque la modification de la hauteur de culture (Hb) surpasse une seconde valeur seuil qui, en particulier, est supérieure à la première valeur seuil.
